# EUROPEAN PATENT APPLICATION

(11) **EP 4 188 003 A1**
(43) Date of publication of application: **31.05.2023**
(21) Application number: 20946347.0
(22) Date of filing: 22.07.2020
(51) Int. Cl.: H04W 72/04

(54) **HANDOVER METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); LU, Qianxi, Dongguan, Guangdong 523860 (CN); HU, Yi, Dongguan, Guangdong 523860 (CN); YOU, Xin, Dongguan, Guangdong 523860 (CN)
(74) Representative: Taor, Simon Edward William
(86) International application number: PCT/CN2020/103491
(87) International publication number: WO 2022/016413

(57) **Abstract**

The disclosure relates to a handover method, a terminal device, and a network device. The method includes the following. A terminal device receives multiple sets of cell configuration information. The terminal device receives first indication information transmitted by a network device, where the first indication information indicates that the terminal device performs cell handover based on one of the multiple sets of cell configuration information. The terminal device performs cell handover according to the first indication information. With implementations of the disclosure, the overhead of handover can be reduced.

## Description

### TECHNICAL FIELD

The disclosure relates to the field of communication, and more particularly, to a handover method, a terminal device, and a network device.

### BACKGROUND

In a non-terrestrial network (NTN) system, communication services are provided to terrestrial users through satellite communication, and due to the long communication distance between a terminal device and a satellite, the round trip time (RTT) of signal transmission is much greater than the RTT in a terrestrial communication system. In order to increase the system capacity of the satellite communication system, the satellite uses multiple beams to cover the ground. One satellite can provide dozens of or even hundreds of beams for ground coverage, and one beam can cover a ground area with a diameter of tens to hundreds of kilometers.

When the satellite moves at a high speed, the connection between the satellite and the terrestrial gateway will be switched, and all terminals in the coverage of the satellite also need to hand over from an original cell to a new cell. According to a general handover procedure, a source base station needs to generate a separate handover command for each terminal and transmit the handover command to each terminal in a short time, which may result in a large signaling overhead and many problems.

### SUMMARY

In view of this, implementations of the disclosure provide a handover method, a terminal device, and a network device, to improve the success rate of handover of the terminal device.

Implementations of the disclosure provide a handover method. The method is applicable to a terminal device and includes the following. The terminal device receives multiple sets of cell configuration information. The terminal device receives first indication information transmitted by a network device, where the first indication information indicates that the terminal device performs cell handover based on one of the multiple sets of cell configuration information. The terminal device performs cell handover according to the first indication information.

Implementations of the disclosure provide a handover method. The method is applicable to a network device and includes the following. The network device transmits cell configuration information to a terminal device, where the cell configuration information is used for the terminal device to hand over from a serving cell to a target cell, and/or the network device transmits first indication information to the terminal device, where the first indication information indicates that the terminal device performs cell handover based on one of multiple sets of cell configuration information configured.

Implementations of the disclosure further provide a terminal device. The terminal device includes a receiving module and a handover processing module. The receiving module is configured to: receive multiple sets of cell configuration information, and receive first indication information transmitted by a network device, where the first indication information indicates that the terminal device performs cell handover based on one of the multiple sets of cell configuration information. The handover processing module is configured to: perform the cell handover according to the first indication information.

Implementations of the disclosure further provide a network device. The network device includes a first transmitting module and/or a second transmitting module. The first transmitting module is configured to: transmit cell configuration information to a terminal device, where the cell configuration information is used for the terminal device to hand over from a serving cell to a target cell. The second transmitting module is configured to: transmit first indication information to the terminal device, where the first indication information indicates that the terminal device performs cell handover based on one of multiple sets of cell configuration information configured.

Implementations of the disclosure further provide a terminal device. The terminal device includes a memory configured to store computer programs, and a processor configured to invoke and execute the computer programs stored in the memory to perform the handover method.

Implementations of the disclosure further provide a network device. The network device includes a memory configured to store computer programs, and a processor configured to invoke and execute the computer programs stored in the memory to perform the handover method.

Implementations of the disclosure further provide a chip. The chip includes a processor configured to invoke and execute computer programs stored in a memory, to cause a device equipped with the chip to perform the handover method.

Implementations of the disclosure further provide a computer-readable storage medium configured to store computer programs operable with a computer to perform the handover method.

Implementations of the disclosure further provide a computer program product. The computer program product includes computer program instructions operable with a computer to perform the handover method.

Implementations of the disclosure further provide a computer program. The computer program is operable with a computer to perform the handover method.

According to implementations of the disclosure, handover configuration information can be provided to the terminal device in advance, thereby solving the problem of shortage of resources for transmitting a large number of handover commands in a short time. By introducing an activation indication, handover and access of the terminal device can be triggered with a small signaling overhead, the probability of handover success can be improved, and the service continuity of the terminal can be maintained.

### BRIEF DESCRIPTION OF THE DRAWINGS

FIG. 1 is a schematic diagram of an architecture of a communication system according to implementations of the disclosure.
FIG. 2 is a schematic diagram illustrating effect of feeder link switch of a satellite in an NTN system.
FIG. 3 is a flowchart of a handover method at terminal device side according to implementations of the disclosure.
FIG. 4 is a flowchart of a handover method at network device side according to implementations of the disclosure.
FIGs. 5 and 6 are schematic diagrams illustrating effect of a handover procedure applied to an NTN system according to implementations of the disclosure.
FIGs. 7 and 8 are schematic diagrams illustrating effect of a PSCell change procedure applied to an NTN system according to implementations of the disclosure.
FIG. 9 is a schematic structural block diagram of a terminal device according to implementations of the disclosure.
FIG. 10 is a schematic structural block diagram of a network device according to implementations of the disclosure.
FIG. 11 is a schematic block diagram of a communication device according to implementations of the disclosure.
FIG. 12 is a schematic block diagram of a chip according to implementations of the disclosure.
FIG. 13 is a schematic block diagram of a communication system according to implementations of the disclosure.

### DETAILED DESCRIPTION

The following will describe technical solutions of implementations of the disclosure with reference to the accompanying drawings.

The technical solutions of implementations of the disclosure are applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (WiFi), a 5th-generation (5G) communication system, or other communication systems.

Generally speaking, a conventional communication system generally supports a limited number of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication. Implementations of the disclosure are also applicable to these communication systems.

Optionally, a communication system of implementations of the disclosure is applicable to a carrier aggregation (CA) scenario, a dual connectivity (DC) scenario, or a standalone (SA) network deployment scenario.

Implementations of the disclosure are described with reference to a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc.

The terminal device may be a station (STA) in a WLAN, or may be a cellular radio telephone, a cordless telephone, a session initiation protocol (SIP) telephone, a wireless local loop (WLL) station, a personal digital assistant (PDA) device, a handheld device with wireless communication functions, a computing device, other processing devices coupled with a wireless modem, an in-vehicle device, a wearable device, a terminal device in a next-generation communication system such as a NR network, a terminal device in a future evolved public land mobile network (PLMN), etc.

In implementations of the disclosure, the terminal device may be deployed on land, for example, deployed indoors or outdoors, and may be handheld, wearable, or vehicle-mounted. The terminal device may also be deployed on water, for example, on a ship, etc. The terminal device may also be deployed in the air, for example, on an airplane, an air balloon, a satellite, etc.

In implementations of the disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

By way of example rather than limitation, in implementations of the disclosure, the terminal device may also be a wearable device. The wearable device may also be referred to as a wearable smart device, which is a generic term of wearable devices obtained through intelligentization designing and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In implementations of the disclosure, the network device may be a device configured to communicate with a mobile device. The network device may be an access point (AP) in the WLAN, a base transceiver station (BTS) in the GSM or CDMA, may also be a Node B (NB) in WCDMA, and may further be an evolutional Node B (eNB or eNodeB) in LTE, or a relay station or AP, or an in-vehicle device, a wearable device, a g-Node B (gNB) in the NR network, a network device in the future evolved PLMN, or the like.

By way of example rather than limitation, in implementations of the disclosure, the network device may be of mobility. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station located on land, water, etc.

In implementations of the disclosure, the network device may provide services for a cell, and the terminal device communicates with the network device through a transmission resource (for example, a frequency domain resource or a spectrum resource) for the cell. The cell may be a cell corresponding to the network device (for example, a base station). The cell may correspond to a macro base station, and may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

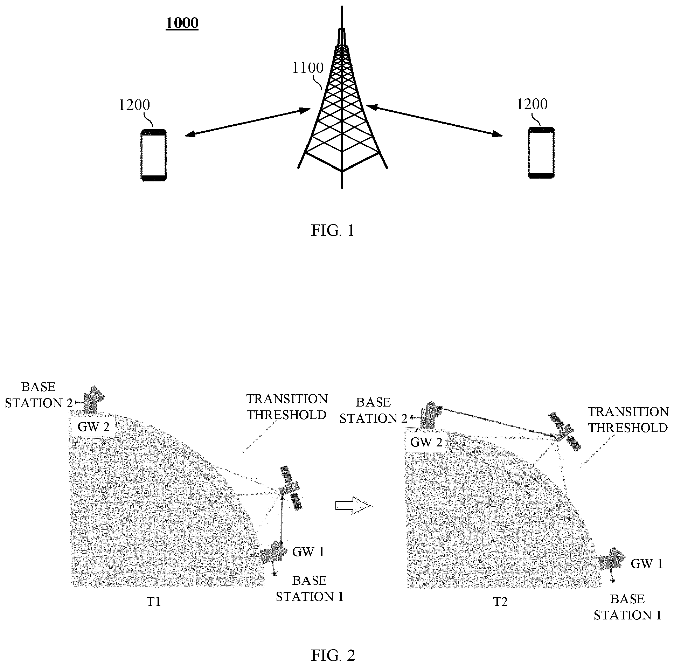

FIG. 1 schematically illustrates one network device 1100 and two terminal devices 1200. Optionally, a wireless communication system 1000 may include multiple network devices 1100, and there may be other numbers of terminal devices in the coverage of each network device 1100, which is not limited herein. Optionally, the wireless communication system 1000 illustrated in FIG. 1 may further include other network entities such as a mobility management entity (MME), an access and mobility management function (AMF), etc., which is not limited herein.

It should be understood that, the terms "system" and "network" herein are usually interchangeable. The term "and/or" herein is used to describe an association relationship between associated objects and represents that three relationships may exist. For example, A and/or B may represent the following three cases: only A exists, both A and B exist, and only B exists. The character "j" herein generally indicates an "or" relationship between the associated objects.

To clearly illustrate the idea of implementations of the disclosure, a related processing procedure of cell handover in a communication system will be briefly described first.

In the LTE system, for a specific scenario, for example, where a target cell can determine that a timing advance (TA) from a UE to a source cell is the same as a TA from the UE to the target cell or the TA from the UE to the target cell is 0, the target cell can configure random access channel (RACH)-skip information in a handover command, that is, the handover procedure can be RACH-less handover (HO). The RACH-skip information may contain an uplink (UL) resource for the UE to access the target cell, for the UE to transmit a handover complete message. If no UL resource is configured in the handover command, the UE needs to monitor a physical downlink control channel (PDCCH) of the target cell, wait for the target cell to schedule UL transmission, and transmit the handover complete message in a scheduled UL resource.

The NR system supports the handover procedure of a UE in connected state. A handover procedure can be defined as a process that due to the movement of a UE using a network service from one cell to another cell or due to wireless transmission service load regulation, activation operation maintenance, device failure, and the like, the NR system may switch a communication link between the UE and an original cell to a new cell for ensuring communication continuity and quality of service. Taking a handover procedure of interface Xₙ as an example, the handover procedure may include the following three stages.
1. Handover preparation, including measurement control and report, and handover request and confirmation, where a handover confirmation message contains a handover command generated by the target cell, and the source base station is not allowed to modify the handover command generated by the target base station, but directly forwards the handover command to the UE.
2. Handover execution, where the UE performs the handover procedure once the UE receives the handover command, and the UE disconnects from the source base station and connects with the target base station.
3. Handover complete, where the target base station, an AMF, and a user plane function (UPF) perform path switch, and the UE context at the source base station is released.

In the NTN system, when the satellite moves at a high speed, the connection between the satellite and the terrestrial gateway also needs to be switched, for example, feeder link switch is needed. The feeder link refers to a wireless link between the satellite and an NTN gateway (usually located in ground). Referring to FIG. 2, two terrestrial gateways are connected to two terrestrial gNBs, such as complete gNBs or central units (CU), or the two terrestrial gateways can be connected to two cells under one gNB. Then, after the feeder link switch occurs, all UEs in the coverage of the satellite need to hand over from an original cell to a new cell. If a general handover procedure is applied, the source base station needs to generate a separate handover command for each UE and transmit the handover command to each UE in a short time, which may result in a large signaling overhead and other problems. For example, due to shortage of resources, not all handover commands can be transmitted in time, which may result in wireless link failure of a UE that has not received a handover command, thereby resulting in data loss and affecting the performance of the UE.

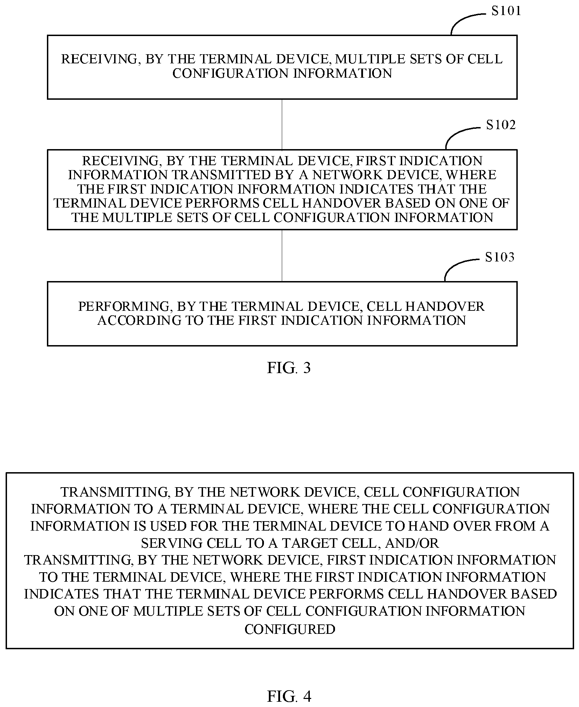

To this end, implementations of the disclosure provide a handover method applicable to a terminal device. Referring to FIG. 3, the method includes the following.

S101, the terminal device receives multiple sets of cell configuration information.

S102, the terminal device receives first indication information transmitted by a network device, where the first indication information indicates that the terminal device performs cell handover based on one of the multiple sets of cell configuration information.

S103, the terminal device performs cell handover according to the first indication information.

According to implementations of the disclosure, the network device may preconfigure multiple sets of cell configuration information for the terminal device, where the multiple sets of cell configuration information correspond to multiple cells respectively. The terminal device will not perform cell handover when the terminal device receives the cell configuration information of the network device, but further receives the first indication information, and performs cell handover by using one of the multiple sets of cell configuration information according to the first indication information. When feeder link switch occurs, for example, in an NTN system, the serving cell of the terminal device may transmit the first indication information to the terminal device, and the terminal device initiates access to the target cell and performs cell handover with the prestored cell configuration information.

In implementations of the disclosure, the multiple sets of cell configuration information may be transmitted to the terminal device by the same network device or different network devices, or may be from a network device of a serving cell or a network device of a target cell. For example, a first set of cell configuration information received by the terminal device is from a first network device, a second set of cell configuration information and a third set of cell configuration information are from a second network device, or the first to third sets of cell configuration information are all from a third network device, all of which can achieve the purpose of configuring handover information for the terminal device in advance. The terminal device can store the multiple sets of handover information received locally, as such, for example, if feeder link switch or other types of handover occurs, the terminal device can perform cell handover with the prestored configuration information. Therefore, the network device does not need to transmit a handover command for each terminal device involved collectively in a short time, thereby reducing the signaling overhead at network side and improving the overall system performance.

Correspondingly, implementations of the disclosure further provide a handover method applicable to a network device. Referring to FIG. 4, the method includes the following.

S201, the network device transmits cell configuration information to a terminal device, where the cell configuration information is used for the terminal device to hand over from a serving cell to a target cell.

Additionally/alternatively, S301, the network device transmits first indication information to the terminal device, where the first indication information indicates that the terminal device performs cell handover based on one of multiple sets of cell configuration information configured.

In implementations of the disclosure, the network device transmits the cell configuration information to the terminal device for the terminal device to perform cell handover. The network device transmitting the cell configuration information to the terminal device may be a network device of a serving cell, a network device of a target cell, or a network device of another cell other than the serving cell and the target cell. In other words, the terminal device may be configured with multiple sets of cell configuration information by one or more network devices.

In implementations of the disclosure, the network device further transmits the first indication information to the terminal device, and the terminal device performs cell handover based on one of the multiple sets of cell configuration information configured according to the first indication information. The first indication information can be regarded as an activation instruction, and the terminal device starts to perform cell handover after activation. In such design, after the cell configuration information is provided to the terminal device in advance, the terminal device can perform cell handover at an appropriate time. Therefore, the network device does not need to transmit a large amount of handover information collectively during handover, and the terminal device can perform cell handover at a correct timing with low overhead, thereby saving the system resources and improving the overall system performance.

As can be seen, according to implementations of the disclosure, handover configuration information can be provided to the terminal device in advance, thereby solving the problem of shortage of resources for transmitting a large number of handover commands in a short time. By introducing an activation indication, handover and access of the terminal device can be triggered with a small signaling overhead, the probability of handover success can be improved, and the service continuity of the terminal can be maintained.

It should be noted that, the processing described in S201 and S301 may be performed by the same network device or different network devices. Taking the first network device as an example, the first network device may transmit the cell configuration information to a terminal device, and may also transmit the first indication information to the same terminal device or other terminal devices, to assist the terminal device to complete cell handover. On the other hand, the first network device may transmit the cell configuration information to the terminal device, and the second network device may provide the first indication information for the terminal device. In other words, the network device in S201 may be the same as or different from the network device in S301, all of which can achieve the purpose of implementations of the disclosure.

Therefore, in implementations of the disclosure, optionally, one or more of the multiple sets of cell configuration information may be transmitted by a network device of a serving cell or a network device of a target cell to the terminal device.

In implementations of the disclosure, optionally, the multiple sets of cell configuration information received may be stored by the terminal device locally for use during cell handover. Optionally, the terminal device may also update the multiple sets of cell configuration information, for example, update the key or part of the configuration, and maintain a latest cell configuration information.

In implementations of the disclosure, the first indication information transmitted by the network device may include one or more kinds of information, such as identification information of a target cell and information of an activation time, which will be described in detail below.

Case 1: The first indication information includes identification information of a target cell.

In implementations of the disclosure, optionally, the terminal device performs cell handover according to the first indication information as follows. The terminal device performs handover to the first target cell based on one set of cell configuration information corresponding to the first target cell among the multiple sets of cell configuration information, after receiving the first indication information.

For example, the terminal device has been configured with the multiple sets of cell configuration information corresponding to different target cells. After receiving identification information of the first target cell, the terminal device initiates access to the cell corresponding to the identification information as the target cell, and completes handover to the target cell with one set of cell configuration information corresponding to the target cell.

Optionally, the identification information of the target cell includes at least one of: an identifier (ID) of the target cell, a physical cell identifier (PCI) of the target cell, a frequency point of the target cell, a cell index of the target cell, an index of cell configuration information corresponding to the target cell in the multiple sets of cell configuration information.

Optionally, the identification information of the target cell is carried in at least one of: radio resource control (RRC) dedicated signaling, a media access control-control element (MAC CE), a PDCCH scrambled with a cell radio network temporary identifier (C-RNTI), a system information broadcast (SIB), a PDCCH scrambled with a paging radio network temporary identifier (P-RNTI), a multicast PDCCH, and a PDCCH scrambled with a group-based group radio network temporary identifier (G-RNTI).

A handover timing may be based on a preset time. For example, the terminal device can be configured to start the handover once the terminal device receives the identification information of the target cell. Alternatively, the terminal device can be configured to perform the handover within a certain time after the terminal device receives the identification information of the target cell.

In addition, in implementations of the disclosure, the network device may transmit a dedicated handover activation time instruction to the terminal device, as detailed below.

Case 2: The first indication information includes information of an activation time.

In implementations of the disclosure, optionally, the terminal device performs cell handover according to the first indication information as follows. The terminal device performs cell handover based on one of the multiple sets of cell configuration information when the first activation time arrives.

Optionally, the information of the activation time includes at least one of: a specified time, a specified time period, and a specified time interval.

For example, the terminal device has been configured with the multiple sets of cell configuration information, and the handover timing is predictable at network side. The network device can determine a specific handover time and transmit the information of the activation time to the terminal device accordingly. When receiving the information of the activation time, the terminal device can start to perform cell handover at the time specified by the information of the activation time. Alternatively, the terminal device can start timing upon reception of the information of the activation time, and start the cell handover when the specified time period or time interval arrives.

In implementations, the multiple sets of cell configuration information is two sets of configuration information, i.e., a first set of cell configuration information and a second set of cell configuration information, where the first set of cell configuration information is configuration information of a current serving cell of the terminal device, and the second set of cell configuration information is configuration information of a cell other than the current serving cell of the terminal device. The terminal device can perform the cell handover based on the second set of cell configuration information when the first activation time arrives.

That is, the network device configures two sets of cell configuration information for the terminal device, one set is the configuration information of the current serving cell, and the other set is the configuration information of another cell. Then, when receiving the information of the activation time, the terminal device can determine to hand over from the current serving cell to another cell. Therefore, the terminal device performs handover from the current serving cell to another cell, i.e., the target cell with the other set of configuration information.

As can be seen, this implementation is especially applicable to a handover procedure between two cells. The terminal device can initiate handover and access to another cell once the activation time is determined, and no special instruction is required to indicate the target cell.

Case 3: The first indication information includes the identification information of the target cell and the information of the activation time.

In implementations of the disclosure, optionally, the terminal device performs cell handover according to the first indication information as follows. The terminal device performs handover to the first target cell based on one set of cell configuration information corresponding to the first target cell among the multiple sets of cell configuration information when the first activation time arrives. That is, the network device provides both the information of the target cell and the information of the activation time to the terminal device.

Optionally, in implementations, the identification information of the first target cell and the information of the first activation time may be transmitted by the network device to the terminal device separately. In other implementations, the identification information of the first target cell and the information of the first activation time may be transmitted by the network device to the terminal device together.

For example, the network device may transmit the identification information of the target cell at a first time and the information of the activation time at a second time. The network device may also transmit the identification information of the target cell and the information of the activation time at the same time. For example, the identification information of the target cell and the information of the activation time may be carried in RRC signaling to deliver to the terminal device.

After receiving the identification information of the target cell and the information of the activation time, the terminal device may access the target cell with one set of cell configuration information corresponding to the target cell among the multiple sets of cell configuration information prestored when the activation time arrives, to complete cell handover.

As an example, assuming that the current serving cell of the terminal device is a third cell, configuration information of a first cell, a second cell, and the third cell are stored by the terminal device locally. After receiving the identification information of the target cell and the information of the activation time, the terminal device can know the specific target cell and handover time. For example, the identification information of the target cell is the ID of the second cell, that is, the second cell is the target cell, and the activation time is ten minutes later. Then, the terminal device will initiate access to the second cell ten minutes after reception of the information of the activation time, to hand over from the third cell to the second cell.

This implementation is applicable to handover between multiple cells, for example, 2, 3, 6, or more cells. The terminal device can hand over to the target cell according to the preconfigured cell configuration information when the activation time arrives, so as to maximize the signaling overhead at network side, and connection interruption at terminal device side due to untimely handover can be avoided, thereby improving the overall system performance and the service quality of the terminal.

The above describes a scenario where the preset cell configuration information is used to assist the terminal in fast cell handover in implementations of the disclosure. Based on the principles of the above implementations, other handover scenarios are also applicable. For example, in a dual-connectivity (DC) architecture, the terminal device can implement a PSCell change procedure from a serving PSCell to a target PSCell according to multiple sets of secondary cell group (SCG) configuration information sent in advance by the network device, which can achieve the same or similar technical effects.

The following describes in detail a cell handover procedure and a PSCell change procedure in implementations of the disclosure respectively with specific examples.

### Implementation 1

In this implementation, the network configures two sets of cell configuration information for the UE, where the two sets of cell configuration information are respectively associated with two cells. During feeder link switch, the serving cell indicate that the UE initiates access to another cell with configuration information corresponding to the other cell, as detailed below.

The UE receives RRC configuration information transmitted by the network, and the two sets of cell configuration information correspond to two cells, where the two sets of cell configuration information may be transmitted to the UE by the same cell or by the two cells respectively.

The UE can update the two sets of cell configuration information, for example, update the key or part of the configuration. For each cell, the UE can maintain and store a latest set of handover command only. The UE will not perform handover when the UE receives the cell configuration information, but saves the configuration information and waits for an activation instruction.

The UE receives the activation instruction transmitted by the network. The activation instruction may be an instruction transmitted by the network to the UE separately, or may be carried in the RRC message to be transmitted to the UE, where the RRC message is for configuring the cell configuration information. The activation instruction indicates that the UE performs handover with the stored cell configuration information, as detailed below.

The activation instruction contains an ID of the target cell for handover, such as a PCI and/or frequency point of the cell, or an index of the cell configuration information, etc. Optionally, the activation instruction may not carry any target cell ID. In this case, the UE may perform handover automatically with configuration information corresponding to another non-serving cell. Optionally, the activation instruction may contain an activation time. The activation time may be an absolute time, a time period, or a time interval, and can be used to determine a time for the UE to perform handover.

Optionally, the activation instruction can be carried in RRC dedicated signaling, a MAC CE, a PDCCH scrambled with a C-RNTI, an SIB, a PDCCH (short message) scrambled with a P-RNTI, or a multicast PDCCH, i.e., a PDCCH scrambled with a group-based G-RNTI.

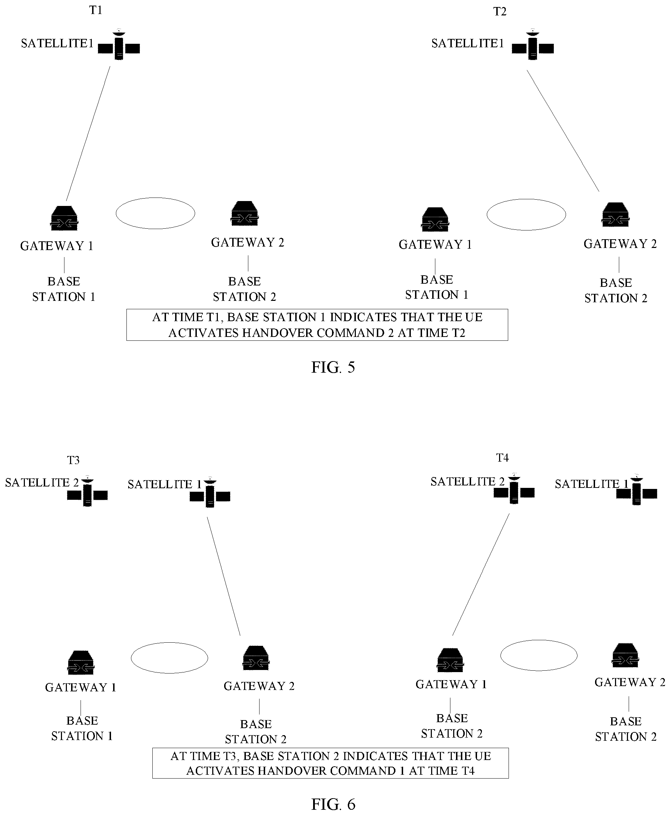

Referring to FIGs. 5 and 6, schematic diagrams illustrating a handover procedure according to implementations of the disclosure applied in an NTN system are illustrated. Two sets of configuration information correspond to base station 1 (gNB 1) and base station 2 (gNB2) respectively. In FIG. 5, satellite 1 is connected to base station 1 via gateway 1, when feeder link switch occurs, satellite 1 will switch from gateway 1 to gateway 2, and a UE connected to base station 1 needs to switch to base station 2. Therefore, base station 1 may transmit an activation instruction at time T1 to indicate that the UE switches to base station 2 at time T2, thereby ensuring that the UE is not affected by the feeder link switch.

Implementations in FIG. 6 are mainly different from implementations in FIG. 5 in that, when the feeder link switch occurs, the satellite for providing communication services is switched from satellite 1 to satellite 2. For the terrestrial gateway and base station, the feeder link switch can be performed by adopting a similar solution, base station 1 transmits an activation instruction at time T3 to indicate that the UE switches to base station 2 at time T4, so that the UE is not affected by the feeder link switch.

### Implementation 2

In this implementation, in the DC architecture, the network configures two sets of SCG configuration information for the UE, where the two sets of SCG configuration information are associated with two PSCells. During feeder link switch, the network indicates that the terminal initiates a PSCell change procedure to a PSCell corresponding another SCG configuration with the SCG configuration, as detailed below.

The UE receives RRC configuration information transmitted by the network, and the two sets of SCG configuration information correspond to two candidate PSCells, where the two sets of SCG configuration information may be transmitted to the UE by the same cell or by the two cells respectively.

The UE can update the two sets of SCG configurations, for example, update the key or part of the configuration. For each candidate PSCell, the UE maintains and stores a latest set of SCG configuration only. The UE will not perform PSCell change when the UE receives the SCG configuration, but saves the SCG configuration and waits for a PSCell change activation instruction.

The UE receives the PSCell change activation instruction transmitted by the network. The activation instruction may be an instruction transmitted by the network to the UE separately, or may be carried in the RRC configuration information to be transmitted to the UE, where the RRC configuration information is for configuring the SCG configuration information. The instruction indicates that the UE perform PSCell change with the stored SCG configuration, as detailed below.

The activation instruction contains an ID of the target PSCell for handover, such as a PCI and/or frequency point of the cell, or an index of the SCG configuration information, etc. Optionally, the activation instruction may not carry any target PSCell ID, and the UE performs PSCell change automatically with a SCG configuration corresponding to another non-serving PSCell. Optionally, the activation instruction may contain an activation time. The activation time may be an absolute time, a time period, or a time interval, and can be used to determine a time for the UE to perform PSCell change.

Optionally, the activation instruction can be carried in RRC dedicated signaling, a MAC CE, a PSCGCH scrambled with a C-RNTI, an SIB, a PDCCH (short message) scrambled with a P-RNTI, or a multicast PDCCH, i.e., a PDCCH scrambled with a group-based G-RNTI.

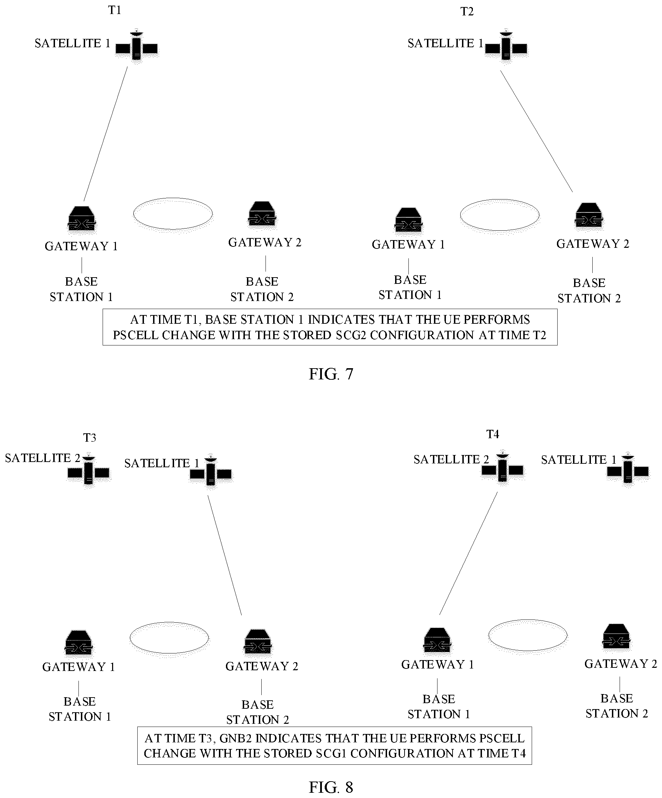

Referring to FIGs. 7 and 8, schematic diagrams illustrating a PSCell change procedure according to implementations of the disclosure applied in an NTN system are illustrated. Two sets of SCG configuration information correspond to base station 1 (gNB 1) and base station 2 (gNB2) respectively. In FIG. 7, satellite 1 is connected to base station 1 via gateway 1, when feeder link switch occurs, satellite 1 will switch from gateway 1 to gateway 2, and a UE connected to base station 1 needs to switch to base station 2. Therefore, base station 1 may transmit an activation instruction at time T1 to indicate that the UE performs PSCell change at time T2 with the stored SCG2 configuration, thereby ensuring that the service of the UE is not affected by the feeder link switch.

Implementations in FIG. 8 are mainly different from implementations in FIG. 7 in that, when the feeder link switch occurs, the satellite for providing communication services is switched from satellite 1 to satellite 2. For the terrestrial gateway and base station, the feeder link switch can be performed by adopting a similar solution, base station 1 transmits an activation instruction at time T3 to indicate that the UE performs PSCell change at time T4 with the stored SCG2 configuration, so that the service of the UE is not affected by the feeder link switch.

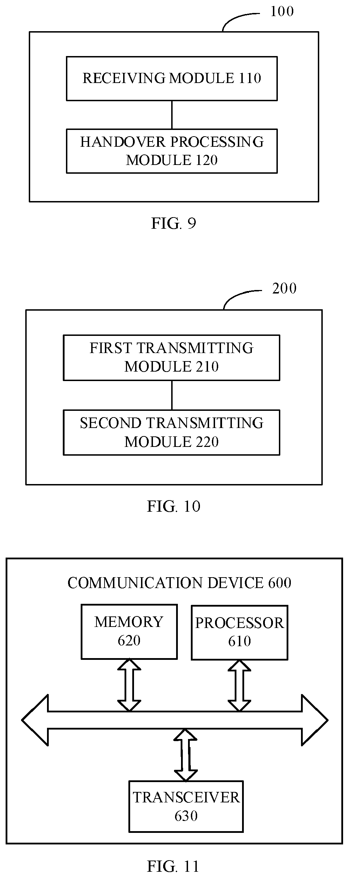

The specific settings and implementations of implementations of the disclosure are described above in various implementations from different perspectives. Corresponding to the processing method of at least one implementation above, implementations of the disclosure further provide a terminal device 100. Referring to FIG. 9, the terminal device 100 includes a receiving module 110 and a handover processing module 120.

The receiving module 110 is configured to receive multiple sets of cell configuration information, and receive first indication information transmitted by a network device, where the first indication information indicates that the terminal device performs cell handover based on one of the multiple sets of cell configuration information. The handover processing module 120 is configured to perform the cell handover according to the first indication information.

Corresponding to the processing method of at least one implementation above, implementations of the disclosure further provide a network device 200. Referring to FIG. 10, the network device 200 includes a first transmitting module 210 and/or a second transmitting module 220.

The first transmitting module 210 is configured to transmit cell configuration information to a terminal device, where the cell configuration information is used for the terminal device to hand over from a serving cell to a target cell. The second transmitting module 220 is configured to transmit first indication information to the terminal device, where the first indication information indicates that the terminal device performs cell handover based on one of multiple sets of cell configuration information configured.

The terminal device 100 and the network device 200 in implementations of the disclosure can implement corresponding functions of the terminal device in method implementations. Corresponding processes, functions, implementations, and beneficial effects of various modules (sub-modules, units, or components) in the terminal device 100 and the network device 200 may be described with reference with corresponding descriptions in method implementations, which will not be repeated herein.

It should be noted that, the described functions of various modules (sub-modules, units, or components) in the terminal device 100 and the network device 200 in implementations of the disclosure may be implemented by different modules (sub-modules, units, or components) or by a same module (sub-module, unit, or component). For example, the first transmitting module and the second transmitting module may be different modules or the same module, and can implement corresponding functions of the terminal device in implementations of the disclosure.

FIG. 11 is a schematic block diagram of a communication device 600 according to implementations of the disclosure. The communication device 600 includes a processor 610, which may invoke and execute computer programs stored in a memory to perform the methods in implementations of the disclosure.

Optionally, the communication device 600 may further include a memory 620. The processor 610 may invoke and run a computer program from the memory 620 to perform the methods in implementations of the disclosure.

The memory 620 may be a separate device independent of the processor 610 or may be integrated in the processor 610.

Optionally, the communication device 600 may further include a transceiver 630. The processor 610 may control the transceiver 630 to communicate with other devices. Specifically, the transceiver 630 may transmit information or data to other devices or receive information or data transmitted by other devices.

The transceiver 630 may include a transmitter and a receiver. The transceiver 630 may further include antennas, the number of which may be one or more.

Optionally, the communication device 600 may be the network device in implementations of the disclosure, and the communication device 600 may implement corresponding processes implemented by the network device in various methods according to implementations of the disclosure, which will not be repeated herein.

Optionally, the communication device 600 may be the terminal device in implementations of the disclosure, and the communication device 600 may implement corresponding processes implemented by the terminal device in various methods according to implementations of the disclosure, which will not be repeated herein.

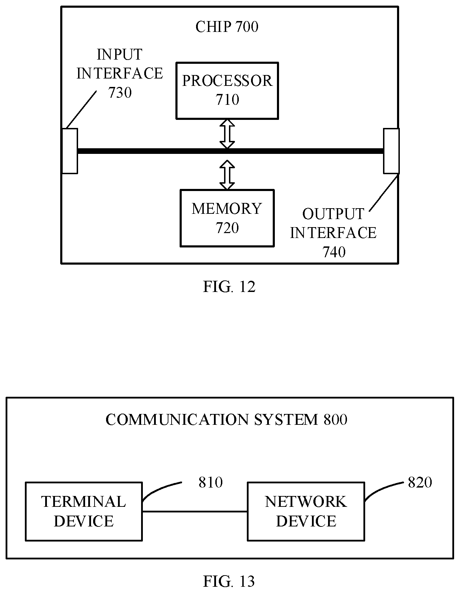

FIG. 12 is a schematic block diagram of a chip 700 according to implementations of the disclosure. The chip 700 includes a processor 710, which may invoke and run a computer program from a memory to perform the methods in implementations of the disclosure.

Optionally, the chip 700 may further include a memory 720. The processor 710 may invoke and run a computer program from the memory 720 to perform the methods in implementations of the disclosure.

The memory 720 may be a separate device independent of the processor 710 or may be integrated in the processor 710.

Optionally, the chip 700 may further include an input interface 730. The processor 710 may control the input interface 730 to communicate with other devices or chips. Specifically, the processor 410 may acquire information or data transmitted by other devices or chips.

Optionally, the chip 700 may further include an output interface 740. The processor 710 may control the output interface 740 to communicate with other devices or chips.
Specifically, the processor 410 may output information or data to other devices or chips.

Optionally, the chip may be applied to the network device in implementations of the disclosure, and the chip may implement corresponding processes implemented by the network device in various methods according to implementations of the disclosure, which will not be repeated herein.

Optionally, the chip may be applied to the terminal device in implementations of FIG. 9 of the disclosure, and the chip may implement corresponding processes implemented by the terminal device in various methods according to implementations of the disclosure, which will not be repeated herein.

It should be understood that the chip mentioned in implementations of the disclosure may also be referred to as a system-level chip, a system chip, a chip system, or a system-on-chip, etc.

The above-mentioned processor may be a general-purpose processor, a digital signal processor (DSP), a field programmable gate array (FPGA), an application specific integrated circuit (ASIC) or another programmable logic device, a transistor logic device, a discrete hardware component, etc. The general-purpose processor mentioned above may be a microprocessor or any conventional processor.

The above-mentioned memory may be a volatile memory or a non-volatile memory, or may include both volatile and non-volatile memories. The non-volatile memory may be a read-only memory (ROM), a programmable ROM (PROM), an erasable PROM (EPROM), an electrically erasable EPROM (EEPROM), or a flash memory. The volatile memory may be a random access memory (RAM).

It should be understood that the foregoing memories are exemplary but not restrictive description. For example, the memory in implementations of the disclosure may be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. That is, the memory in implementations of the disclosure is intended to include, but is not limited to, these and any other suitable types of memories.

FIG. 13 is a schematic block diagram of a communication system 800 according to implementations of the disclosure. The communication system 800 includes a terminal device 810 and a network device 820.

The terminal device 810 may be configured to implement corresponding functions implemented by the terminal device in the methods in implementations of the disclosure, and the network device 820 may be configured to implement corresponding functions implemented by the network device in the methods in implementations of the disclosure, which will not be repeated herein for the sake of brevity.

The functions in implementations described above may be implemented in whole or in part through software, hardware, firmware, or any combination thereof. When implemented through software, the functions may be implemented in whole or in part in a form of a computer program product. The computer program product includes one or more computer instructions. When the computer program instructions are loaded and executed on a computer, processes or functions are generated in whole or in part according to implementations of the disclosure. The computer may be a general-purpose computer, a special purpose computer, a computer network, or another programmable apparatus. The computer instructions may be stored in a computer-readable storage medium, or may be transmitted from one computer-readable storage medium to another computer-readable storage medium. For example, the computer instructions may be transmitted from a website site, a computer, a server, or a data center to another website site, computer, server, or data center through a wired mode (e.g., a coaxial cable, an optical fiber, and a digital subscriber line (DSL)) or a wireless mode (e.g., infrared radiation, radio, and microwave.). The computer-readable storage medium may be any available medium which a computer may access to, or a data storage device such as a server or data center that includes one or more available media integrated therein. The available medium may be a magnetic medium (e.g., a floppy disk, a hard disk, and a magnetic tape), an optical medium (e.g., a digital video disc (DVD)), or a semiconductor medium (e.g., a solid state disk (SSD)), or the like.

It should be understood that sizes of serial numbers of the foregoing processes do not mean execution sequences in various implementations of the disclosure. The execution sequences of the processes should be determined according to functions and internal logics of the processes, and should not impose any limitation on implementation processes of implementations of the disclosure.

Those skilled in the art may clearly understand that for the sake of convenience and conciseness of description, specific working processes of the systems, apparatuses, and units described above may be known with reference with corresponding processes in the aforementioned method implementations, and will not be repeated herein.

What are described above are specific implementations of the disclosure, but the protection scope of the disclosure is not limited thereto. Any variation or substitution that may easily occur to a person skilled in the art within the technical scope disclosed in the disclosure shall be included within the protection scope of implementations of the disclosure. Therefore, the protection scope of the disclosure shall be subject to the protection scope of the claims.

## Claims

1. A handover method, being applicable to a terminal device and comprising:
receiving, by the terminal device, a plurality of sets of cell configuration information;
receiving, by the terminal device, first indication information transmitted by a network device, the first indication information indicating that the terminal device performs cell handover based on one of the plurality of sets of cell configuration information; and
performing, by the terminal device, the cell handover according to the first indication information.

2. The method of claim 1, wherein
the first indication information comprises identification information of a first target cell, and
performing, by the terminal device, the cell handover according to the first indication information comprises:
performing, by the terminal device, handover to the first target cell based on one set of cell configuration information corresponding to the first target cell among the plurality of sets of cell configuration information after receiving the first indication information.

3. The method of claim 1, wherein
the first indication information comprises information of a first activation time, and
performing, by the terminal device, the cell handover according to the first indication information comprises:
performing, by the terminal device, the cell handover based on one of the plurality of sets of cell configuration information when the first activation time arrives.

4. The method of claim 3, wherein the plurality of sets of cell configuration information comprise a first set of cell configuration information and a second set of cell configuration information,
the first set of cell configuration information is configuration information of a current serving cell of the terminal device,
the second set of cell configuration information is configuration information of a cell other than the current serving cell of the terminal device, and
performing, by the terminal device, the cell handover based on the set of cell configuration information among the plurality of sets of cell configuration information when the first activation time arrives comprises:
performing, by the terminal device, the cell handover based on the second set of cell configuration information when the first activation time arrives.

5. The method of claim 1, wherein
the first indication information comprises identification information of a first target cell and information of a first activation time, and
performing, by the terminal device, the cell handover according to the first indication information comprises:
performing, by the terminal device, handover to the first target cell based on one set of cell configuration information corresponding to the first target cell among the plurality of sets of cell configuration information when the first activation time arrives.

6. The method of claim 2 or 5, wherein
the identification information of the first target cell comprises at least one of: an identifier (ID) of the first target cell, a physical cell identifier (PCI) of the first target cell, a frequency point of the first target cell, a cell index of the first target cell, and an index of cell configuration information corresponding to the first target cell in the plurality of sets of cell configuration information.

7. The method of any of claims 3 to 6, wherein
the information of the first activation time comprises at least one of: a specified time, a specified time period, and a specified time interval.

8. The method of any of claims 3 to 7, wherein
the information of the first activation time is carried in at least one of: radio resource control (RRC) dedicated signaling, a media access control-control element (MAC CE), a physical downlink control channel (PDCCH) scrambled with a cell radio network temporary identifier (C-RNTI), a system information broadcast (SIB), a PDCCH scrambled with a paging radio network temporary identifier (P-RNTI), a multicast PDCCH, and a PDCCH scrambled with a group-based group radio network temporary identifier (G-RNTI).

9. The method of any of claims 2 and 5 to 8, wherein
the identification information of the first target cell is carried in at least one of: RRC dedicated signaling, a MAC CE, a PDCCH scrambled with a C-RNTI, an SIB, a PDCCH scrambled with a P-RNTI, a multicast PDCCH, and a PDCCH scrambled with a group-based G-RNTI.

10. The method of any of claims 5 to 9, wherein
the identification information of the first target cell and the information of the first activation time are transmitted by the network device to the terminal device separately, or
the identification information of the first target cell and the information of the first activation time are transmitted by the network device to the terminal device together.

11. The method of any of claims 1 to 10, wherein
one or more of the plurality of sets of cell configuration information are transmitted by a network device of a serving cell to the terminal device, and/or
one or more of the plurality of sets of cell configuration information are transmitted by a network device of a target cell to the terminal device.

12. The method of any of claims 1 to 11, wherein
the plurality of sets of cell configuration information received are stored by the terminal device locally.

13. The method of any of claims 1 to 12, further comprising:
updating, by the terminal device, the plurality of sets of cell configuration information.

14. The method of claims 1 to 13, wherein
the cell configuration information comprises secondary cell group (SCG) configuration information, and
the first indication information indicates that the terminal device performs primary secondary cell (PSCell) change from a serving PSCell to a target PSCell based on one of a plurality of sets of SCG configuration information.

15. The method of claims 1 to 14, wherein
a first activation time is related to a time when feeder link switch occurs in a non-terrestrial network (NTN).

16. A handover method, being applicable to a network device and comprising:
transmitting, by the network device, cell configuration information to a terminal device, the cell configuration information being used for the terminal device to hand over from a serving cell to a target cell; and/or
transmitting, by the network device, first indication information to the terminal device, the first indication information indicating that the terminal device performs cell handover based on one of a plurality of sets of cell configuration information configured.

17. The method of claim 16, wherein
the first indication information comprises identification information of a first target cell, and
the identification information of the first target cell is used for the terminal device to perform handover to the first target cell based on one set of cell configuration information corresponding to the first target cell among the plurality of sets of cell configuration information.

18. The method of claim 16, wherein
the first indication information comprises information of a first activation time, and
the information of the first activation time is used for the terminal device to perform the cell handover based on one of the plurality of sets of cell configuration information when the first activation time arrives.

19. The method of claim 18, wherein the plurality of sets of cell configuration information comprise a first set of cell configuration information and a second set of cell configuration information,
the first set of cell configuration information is configuration information of a current serving cell of the terminal device,
the second set of cell configuration information is configuration information of a cell other than the current serving cell of the terminal device, and
the information of the first activation time is further used for the terminal device to perform the cell handover based on the second set of cell configuration information when the first activation time arrives.

20. The method of claim 16, wherein
the first indication information comprises identification information of a first target cell and information of a first activation time, and
the identification information of the first target cell and the information of the first activation time are used for the terminal device to perform handover to the first target cell based on one set of cell configuration information corresponding to the first target cell among the plurality of sets of cell configuration information when the first activation time arrives.

21. The method of claim 17 or 20, wherein
the identification information of the first target cell comprises at least one of: an identifier (ID) of the first target cell, a physical cell identifier (PCI) of the first target cell, a frequency point of the first target cell, a cell index of the first target cell, and an index of cell configuration information corresponding to the first target cell in the plurality of sets of cell configuration information.

22. The method of any of claims 18 to 21, wherein
the information of the first activation time comprises at least one of: a specified time, a specified time period, and a specified time interval.

23. The method of any of claims 18 to 22, wherein
the information of the first activation time is carried in at least one of: radio resource control (RRC) dedicated signaling, a media access control-control element (MAC CE), a physical downlink control channel (PDCCH) scrambled with a cell radio network temporary identifier (C-RNTI), a system information broadcast (SIB), a PDCCH scrambled with a paging radio network temporary identifier (P-RNTI), a multicast PDCCH, and a PDCCH scrambled with a group-based group radio network temporary identifier (G-RNTI).

24. The method of any of claims 17 and 20 to 23, wherein
the identification information of the first target cell is carried in at least one of: RRC dedicated signaling, a MAC CE, a PDCCH scrambled with a C-RNTI, an SIB, a PDCCH scrambled with a P-RNTI, a multicast PDCCH, and a PDCCH scrambled with a group-based G-RNTI.

25. The method of any of claims 20 to 24, wherein
the identification information of the first target cell and the information of the first activation time are transmitted by the network device to the terminal device separately, or
the identification information of the first target cell and the information of the first activation time are transmitted by the network device to the terminal device together.

26. The method of any of claims 16 to 25, wherein
one or more of the plurality of sets of cell configuration information are transmitted by a network device of a serving cell to the terminal device, and/or
one or more of the plurality of sets of cell configuration information are transmitted by a network device of a target cell to the terminal device.

27. The method of any of claims 16 to 26, further comprising:
transmitting, by the network device, update information of the cell configuration information to the terminal device.

28. The method of claims 16 to 27, wherein
the cell configuration information comprises secondary cell group (SCG) configuration information, and
the first indication information indicates that the terminal device performs primary secondary cell (PSCell) change from a serving PSCell to a target PSCell based on one of a plurality of sets of SCG configuration information.

29. The method of claims 16 to 28, wherein
a first activation time is related to a time when feeder link switch occurs in a non-terrestrial network (NTN).

30. A terminal device, comprising:
a receiving module, configured to:
receive a plurality of sets of cell configuration information; and
receive first indication information transmitted by a network device, the first indication information indicating that the terminal device performs cell handover based on one of the plurality of sets of cell configuration information; and
a handover processing module configured to:
perform the cell handover according to the first indication information.

31. The terminal device of claim 30, wherein
the first indication information comprises identification information of a first target cell, and
the handover processing module is configured to:
perform handover to the first target cell based on one set of cell configuration information corresponding to the first target cell among the plurality of sets of cell configuration information after receiving the first indication information.

32. The terminal device of claim 30, wherein
the first indication information comprises information of a first activation time, and
the handover processing module is configured to:
perform the cell handover based on one of the plurality of sets of cell configuration information when the first activation time arrives.

33. The terminal device of claim 32, wherein the plurality of sets of cell configuration information comprise a first set of cell configuration information and a second set of cell configuration information,
the first set of cell configuration information is configuration information of a current serving cell of the terminal device,
the second set of cell configuration information is configuration information of a cell other than the current serving cell of the terminal device, and
the handover processing module is configured to:
perform the cell handover based on the second set of cell configuration information when the first activation time arrives.

34. The terminal device of claim 30, wherein
the first indication information comprises identification information of a first target cell and information of a first activation time, and
the handover processing module is configured to:
perform handover to the first target cell based on one set of cell configuration information corresponding to the first target cell among the plurality of sets of cell configuration information when the first activation time arrives.

35. The terminal device of claim 31 or 34, wherein
the identification information of the first target cell comprises at least one of: an identifier (ID) of the first target cell, a physical cell identifier (PCI) of the first target cell, a frequency point of the first target cell, a cell index of the first target cell, and an index of cell configuration information corresponding to the first target cell in the plurality of sets of cell configuration information.

36. The terminal device of any of claims 32 to 35, wherein
the information of the first activation time comprises at least one of: a specified time, a specified time period, and a specified time interval.

37. The terminal device of any of claims 32 to 36, wherein
the information of the first activation time is carried in at least one of: radio resource control (RRC) dedicated signaling, a media access control-control element (MAC CE), a physical downlink control channel (PDCCH) scrambled with a cell radio network temporary identifier (C-RNTI), a system information broadcast (SIB), a PDCCH scrambled with a paging radio network temporary identifier (P-RNTI), a multicast PDCCH, and a PDCCH scrambled with a group-based group radio network temporary identifier (G-RNTI).

38. The terminal device of any of claims 31 and 34 to 37, wherein
the identification information of the first target cell is carried in at least one of: RRC dedicated signaling, a MAC CE, a PDCCH scrambled with a C-RNTI, an SIB, a PDCCH scrambled with a P-RNTI, a multicast PDCCH, and a PDCCH scrambled with a group-based G-RNTI.

39. The terminal device of any of claims 34 to 38, wherein
the identification information of the first target cell and the information of the first activation time are transmitted by the network device to the terminal device separately, or
the identification information of the first target cell and the information of the first activation time are transmitted by the network device to the terminal device together.

40. The terminal device of any of claims 30 to 39, wherein
one or more of the plurality of sets of cell configuration information are transmitted by a network device of a serving cell to the terminal device, and/or
one or more of the plurality of sets of cell configuration information are transmitted by a network device of a target cell to the terminal device.

41. The terminal device of any of claims 30 to 40, wherein
the plurality of sets of cell configuration information received are stored by the terminal device locally.

42. The terminal device of any of claims 30 to 41, further comprising:
an update module configured to update the plurality of sets of cell configuration information.

43. The terminal device of claims 30 to 42, wherein
the cell configuration information comprises secondary cell group (SCG) configuration information, and
the first indication information indicates that the terminal device performs primary secondary cell (PSCell) change from a serving PSCell to a target PSCell based on one of a plurality of sets of SCG configuration information.

44. The terminal device of claims 30 to 43, wherein
a first activation time is related to a time when feeder link switch occurs in a non-terrestrial network (NTN).

45. A network device, comprising:
a first transmitting module configured to:
transmit cell configuration information to a terminal device, the cell configuration information being used for the terminal device to hand over from a serving cell to a target cell; and/or
a second transmitting module is configured to:
transmit first indication information to the terminal device, the first indication information indicating that the terminal device performs cell handover based on one of a plurality of sets of cell configuration information configured.

46. The network device of claim 45, wherein
the first indication information comprises identification information of a first target cell, and
the identification information of the first target cell is used for the terminal device to perform handover to the first target cell based on one set of cell configuration information corresponding to the first target cell among the plurality of sets of cell configuration information.

47. The network device of claim 45, wherein
the first indication information comprises information of a first activation time, and
the information of the first activation time is used for the terminal device to perform the cell handover based on one of the plurality of sets of cell configuration information when the first activation time arrives.

48. The network device of claim 47, wherein the plurality of sets of cell configuration information comprise a first set of cell configuration information and a second set of cell configuration information,
the first set of cell configuration information is configuration information of a current serving cell of the terminal device,
the second set of cell configuration information is configuration information of a cell other than the current serving cell of the terminal device, and
the information of the first activation time is further used for the terminal device to perform the cell handover based on the second set of cell configuration information when the first activation time arrives.

49. The network device of claim 45, wherein
the first indication information comprises identification information of a first target cell and information of a first activation time, and
the identification information of the first target cell and the information of the first activation time are used for the terminal device to perform handover to the first target cell based on one set of cell configuration information corresponding to the first target cell among the plurality of sets of cell configuration information when the first activation time arrives.

50. The network device of claim 46 or 49, wherein
the identification information of the first target cell comprises at least one of: an identifier (ID) of the first target cell, a physical cell identifier (PCI) of the first target cell, a frequency point of the first target cell, a cell index of the first target cell, and an index of cell configuration information corresponding to the first target cell in the plurality of sets of cell configuration information.

51. The network device of any of claims 47 to 50, wherein
the information of the first activation time comprises at least one of: a specified time, a specified time period, and a specified time interval.

52. The network device of any of claims 47 to 51, wherein
the information of the first activation time is carried in at least one of: radio resource control (RRC) dedicated signaling, a media access control-control element (MAC CE), a physical downlink control channel (PDCCH) scrambled with a cell radio network temporary identifier (C-RNTI), a system information broadcast (SIB), a PDCCH scrambled with a paging radio network temporary identifier (P-RNTI), a multicast PDCCH, and a PDCCH scrambled with a group-based group radio network temporary identifier (G-RNTI).

53. The network device of any of claims 46 and 49 to 52, wherein
the identification information of the first target cell is carried in at least one of: RRC dedicated signaling, a MAC CE, a PDCCH scrambled with a C-RNTI, an SIB, a PDCCH scrambled with a P-RNTI, a multicast PDCCH, and a PDCCH scrambled with a group-based G-RNTI.

54. The network device of any of claims 49 to 53, wherein
the identification information of the first target cell and the information of the first activation time are transmitted by the network device to the terminal device separately, or
the identification information of the first target cell and the information of the first activation time are transmitted by the network device to the terminal device together.

55. The network device of any of claims 45 to 54, wherein
one or more of the plurality of sets of cell configuration information are transmitted by a network device of a serving cell to the terminal device, and/or
one or more of the plurality of sets of cell configuration information are transmitted by a network device of a target cell to the terminal device.

56. The network device of any of claims 45 to 55, further comprising:
transmitting, by the network device, update information of the cell configuration information to the terminal device.

57. The network device of claims 45 to 56, wherein
the cell configuration information comprises secondary cell group (SCG) configuration information, and
the first indication information indicates that the terminal device performs primary secondary cell (PSCell) change from a serving PSCell to a target PSCell based on one of a plurality of sets of SCG configuration information.

58. The network device of claims 45 to 57, wherein
a first activation time is related to a time when feeder link switch occurs in a non-terrestrial network (NTN).

59. A terminal device comprising:
a memory configured to store computer programs; and
a processor configured to invoke and execute the computer programs stored in the memory to perform the method of any of claims 1 to 15.

60. A network device comprising:
a memory configured to store computer programs; and
a processor configured to invoke and execute the computer programs stored in the memory to perform the method of any of claims 16 to 29.

61. A chip comprising:
a processor configured to invoke and execute computer programs stored in a memory, to cause a device equipped with the chip to perform the method of any of claims 1 to 29.

62. A computer-readable storage medium configured to store computer programs operable with a computer to perform the method of any of claims 1 to 29.

63. A computer program product comprising computer program instructions operable with a computer to perform the method of any of claims 1 to 29.

64. A computer program being operable with a computer to perform the method of any of claims 1 to 29.
